# EUROPEAN PATENT APPLICATION

(11) **EP 4 534 286 A1**
(43) Date of publication of application: **09.04.2025**
(21) Application number: 24203602.8
(22) Date of filing: 30.09.2024
(51) Int. Cl.: B32B 27/08, B32B 27/10, B32B 7/12

(54) **LAMINATED PACKAGING MATERIAL, PACKAGING CONTAINER COMPRISING THE LAMINATED PACKAGING MATERIAL, AND METHODS OF MAKING THE MATERIAL AND CONTAINER**

(30) Priority: 05.10.2023 EP 23201941
(71) Applicant: Tetra Laval Holdings & Finance S.A., 1009 Pully (CH)
(72) Inventor: PAPAZOGLU, Alexander, 221 86 Lund (SE); KLESHCHANOK, Dzina, 221 86 Lund (SE); GRIP, Kristina, 221 86 Lund (SE); SCHUMAN, Thomas, 221 86 Lund (SE); CAMACHO, Walker, 221 86 Lund (SE); KARLBERG, Maria, 221 86 Lund (SE)
(74) Representative: Tetra Pak - Patent Attorneys SE

(57) **Abstract**

A laminated packaging material for packaging of liquid or semi-liquid food products comprises as layers of a layer sequence:
- an outermost liquid-tight polymer layer;
- a bulk layer of paper or paperboard or other cellulose-based material;
- a barrier layer comprising an oriented substrate film comprising 50 to 100 wt% high density polyethylene (HDPE), a first barrier coating of vinyl alcohol polymer on the substrate film, and a second barrier coating of vapour-deposited metal on the vinyl alcohol barrier coating, the barrier layer being arranged with the metal barrier coating towards the bulk layer and the substrate film toward the innermost layer; and
- an innermost liquid-tight, heat-sealable polymer product contact layer comprising polyethylene.

A packaging container comprising the laminated packaging material, and methods of making the laminated packaging material and packaging container are also disclosed.

## Description

### Technical field

The present invention relates to a laminated packaging material comprising a barrier-coated substrate film, in particular intended for liquid carton food packaging, to a method of making such a laminated packaging material, to a packaging container comprising the laminated packaging material and to a method of making such a packaging container.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium (Al) foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally cuboid shape, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced in bacteria and the filled packaging container is produced under clean conditions such that the filled package may be stored for a long time even at ambient temperature, without the risk of growth of micro-organisms in the filled product. Another important advantage of the Tetra Brik^{®}-type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most other gas barrier materials. The conventional aluminium foil based packaging laminate for liquid food aseptic packaging is still the most cost-efficient packaging material, at its level of performance, available on the market today.

WO03095200A of the applicant relates to a packaging laminate with an aluminium foil barrier layer. It notes that where the laminate is used in long term packaging and storage of aggressive or acidic foodstuffs such as fruit juices, the adhesion between layers will be reduced over time because of migration of free fatty acids through the inside layers of thermoplastic material from the product into the interface between the aluminium foil and adjacent layer of adhesive polymer (which may be a modified polyolefin such as maleic-anhydride graft modified LLDPE, MAH-g-LLDPE, or ethylene and (meth)acrylic acid copolymer, EAA or EMAA). This has the result that adhesion between these layers and openability of the container will be considerably reduced after a time period such as a few months or a year. This problem is addressed in WO03095200A by including an inner part-layer providing barrier properties towards migration of free fatty acids. The inner part-layer may comprise cycloolefin copolymer, or may comprise a blend of polyethylene and finely dispersed filler.

There is a need to provide alternative barrier materials to aluminium foil to reduce the carbon footprint further. Aluminium foil barriers for liquid carton food packaging are normally from 5 to 9 µm, such as most commonly about 6 µm.

Any other material to compete with the foil-based materials should be cost-efficient regarding raw materials, have comparable food preserving properties, a reduced carbon footprint and have a comparably low complexity in the converting of materials into a finished packaging laminate.

Among the efforts of developing non-aluminium-foil materials for liquid food carton packaging, there is also a general incentive towards developing premanufactured films or sheets having high barrier properties, or towards combining several separate barrier materials in a multilayer film or sheet. Such films or sheets would replace the aluminium-foil barrier material in the conventional laminated packaging material and may further be adapted to conventional processes for lamination and manufacturing of laminated packaging materials.

In line with increased requirements to use only sustainable materials, polymeric barrier materials originating from fossil sources have become less interesting, and thus it remains to work with the types of thin barrier coatings which would be almost negligible in recycling processes and cause very little problem in an economy based on circulation of materials and renewable (non-fossil) materials, i.e. aqueous dispersion coatings and vapour deposition coatings. Such coatings are applied on substrates which do not typically provide significant barrier properties themselves. The thickness of a dispersion coated polymer is around 1-2 µm, while vapour deposited barrier coatings are as thin as below 0.5 µm, such as from 10 to 100 nm, such as from 15 to 80 nm, such as from 20 to 50 nm. Various such coatings have been developed since many years and have been combined in multilayer packaging material structures in search for an improved total performance. Although some of these coatings exhibit excellent barrier properties, the beverage carton packaging industry is still looking for optimal coatings or coating combinations, which would be able to replace aluminium foil in all respects.

Development materials of the past have e.g. concerned aqueous polymer compositions suitable for dispersion and/or solution coating of thin layers, such as PVOH, starch and the like. The common difficulty with this type of polymer binders is that they are sensitive to high moisture conditions and lose their inherent oxygen barrier properties with increasing exposure to, and content of, moisture, i.e. conditions in laminated packaging materials of filled, liquid carton packaging containers. It has been concluded that such thin, dispersion coated polymer layers need to be supplemented with further materials to improve gas barrier properties, either in the form of additional compounds in the dispersion composition, such as crosslinkers or inorganic particles, or in the form of additional material layers acting as barriers to water vapour.

CN115257108 of SIG Combibloc Suzhou Co Ltd discloses a barrier layer for packaging, a sheet-shaped composite layer and a packaging container with the sheet-shaped composite layer. The barrier layer for packaging does not include a metal layer, but includes a base layer and a first barrier layer of metal oxide disposed on top of the base layer. The base layer comprises at least two different polymers, so that the barrier layer for packaging has at least two melting point peaks and thereby prevents bubble formation during sealing.

There is thus a need for improved laminated packaging materials, at reasonable cost, to satisfy the future requirements regarding recyclability and sustainable material sourcing and manufacturing.

### Summary of the invention

According to a first aspect, the invention relates to a laminated packaging material for packaging of liquid or semi-liquid food products, comprising as layers of a layer sequence:
- an outermost liquid-tight polymer layer;
- a bulk layer of paper or paperboard or other cellulose-based material;
- a barrier layer comprising an oriented substrate film comprising 50 to 100 wt% high density polyethylene (HDPE), a first barrier coating of vinyl alcohol polymer on the substrate film, and a second barrier coating of vapour-deposited metal on the vinyl alcohol barrier coating, the barrier layer being arranged with the metal barrier coating towards the bulk layer and the substrate film toward the innermost layer; and
- an innermost liquid-tight, heat-sealable polymer product contact layer comprising polyethylene.

In a second aspect of the invention there is provided a method of making a laminated packaging material as described above, comprising lamination of the bulk layer, barrier layer, outermost layer and innermost layer.

In a third aspect of the invention there is provided a packaging container comprising the laminated packaging material described above. According to an embodiment, the packaging container is manufactured at least partly from the laminated packaging material of the invention, and according to a further embodiment it is made in its entirety of the laminated packaging material.

In a fourth aspect of the invention there is provide a method of making the packaging container.

All features described in connection with any aspect of the invention can be used with any other aspect of the invention.

### Detailed description

By the term "long-term storage", used in connection with the present invention, it is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

By the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures, and the like within each material layer itself, and yet another contribution comes from the strength of the sealing joints, by which the material is sealed together at the formation of a packaging container. Regarding the laminated packaging material itself, the integrity property is thus mainly focused on the adhesion of the respective laminate layers to their adjacent layers, as well as the quality of the individual material layers. Regarding the sealing of the packages, the integrity is mainly focussed on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content, i.e. including food products having a high viscosity, like sauces, pastes and soups, and food products that optionally may contain pieces of food. Dairy and milk, soy, rice, grains and seed drinks, juice, nectar, still drinks, energy drinks, sport drinks, coffee or tea drinks, coconut water, wine, soups, tomatoes, sauce (such as pasta sauce) and olive oil are some nonlimiting example of food products contemplated.

The term "aseptic" in connection with a packaging material and packaging container refers to conditions where microorganisms are eliminated, inactivated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value, such as for example its vitamin C content.

By the term "bulk layer" is normally meant the thickest layer or the layer containing the most material in a multilayer laminate, i.e. the layer which contributes most to the mechanical properties and the dimensional stability of the laminate and of packaging containers folded from the laminate, such as paperboard or carton.

The term "polyethylene" refers to a polymer comprising ethylene monomers at from about 90 to 100 mol%. There are various types of polyethylene, as explained below.

Low density polyethylene, LDPE, has a density of 917 to 930 kg/m³. It is typically polymerised from ethylene monomers alone and has a branched polymer chain structure (on about 2 % of the carbon atoms), such that its molecules are less tightly packed and less crystalline, and therefore its density is lower than for linear polyethylenes, such as linear low density polyethylene, LLDPE, or high density polyethylene, HDPE.

The term "linear low density polyethylene" (or "LLDPE") covers all linear low density polyethylenes, including "ZN-LLDPE" polymerised by means of Ziegler-Natta type catalysts as well as "m-LLDPE" polymerised by catalysts of so-called "constrained geometry", or "single-site" catalysts, such as "metallocene" catalysts, and other linear low density polyethylenes. Both ZN-LLDPE and m-LLDPE (also referred to as "mPE") are typically produced by copolymerising an ethylene monomer with a C₄-C₈, more preferably a C₆-C₈, alpha-olefin alkylene monomer, the latter in the presence of a metallocene catalyst. 1 to 10 mol%, suitably 8 to 10 mol%, comonomer content is typical. LLDPE has significant numbers of short branches. It differs structurally from conventional low-density polyethylene (LDPE) because of the absence of long chain branching. LLDPE polymer typically has a narrower molecular weight distribution than conventional LDPE (this is true for m-LLDPE especially) and significantly different rheological properties.

High density polyethylene, HDPE, has a density of 930 to 970 kg/m³. Up to 2 mol% comonomer content is typical. The lack of branching is ensured by an appropriate choice of catalyst (e.g. ZN catalysts) and reaction conditions.

The term "dispersion coating" herein relates to a coating technique in which an aqueous or substantially aqueous dispersion, suspension, emulsion or solution of a polymer is applied to the surface of a substrate layer, usually in the form of a continuous web, to form a solid, substantially non-porous film after drying. The term "dispersion" covers thus also any solution, suspension, emulsion or solution or mixes thereof, that would be capable of providing such a coating after drying. Vinyl alcohol polymers, such as polyvinyl alcohols (PVOH, PVAL) and ethylene vinyl alcohol copolymers with a low ethylene content are typical polymers suitable for dispersion coating, but may for example at high saponification degrees in practice rather be polymer solutions, or mixes of dispersed and dissolved PVOH or EVOH. A dispersion-coated barrier layer or coating is formed by a dispersion coating, also called "liquid-film coating", techniques. The aqueous dispersion may comprise fine polymer particles in suspension or emulsion, and thus be a latex.

The barrier layer comprises an oriented substrate film comprising 50 to 100 wt% high density polyethylene.

Suitably, the total amount of comonomers present in the HDPE is 0.0 to 0.40 mol%, more preferably 0.01 to 0.30 mol%, and most preferably 0.02 to 0.20 mol%. Examples of such films are given in EP4052902 of Borealis e.g. resin Borstar FB5600 of Borouge.

Preferably, the HDPE is of density 950 to 965 kg/m³, and/or of melt flow index from 0.1 (or below) to 2.0 g/10 min at 190 °C/2.16 kg (measured according to ISO 1133).

Suitably, the film is a multilayer film, for example comprising a core layer and skin layers. Suitably, the skin is based on ethylene terpolymer, with alpha-olefin comonomers e.g. C₄ or C₆ alpha-olefin.

The barrier layer further comprises a first barrier coating of vinyl alcohol polymer on the substrate film, and a second barrier coating of vapour deposited metal on the vinyl alcohol barrier coating.

The barrier layer is arranged in the laminated packaging material with the metal barrier coating towards the bulk layer and the substrate film toward the innermost layer. This is referred to as "coating facing laminate" (CFL). The opposite arrangement is referred to as "coating facing inside" (CFI).

Preferably, the barrier layer substrate film comprises 60 to 100 wt% HDPE, more preferably 80 to 100 wt% HDPE, most preferably 90 to 100 wt% HDPE. In a preferred embodiment, the barrier layer substrate film consists of HDPE.

Preferably, the barrier layer substrate film has a single melting peak as measured by differential scanning calorimetry, DSC, under the conditions defined in CN115257108 with reference to DIN EN ISO 11357-1:2010-03.

Preferably, the oriented substrate film is mono-axially oriented (also referred to as "MDO", "MO", "M" or "O") in the machine direction (MD) and is not substantially stretched in the cross direction (CD). It may alternatively be biaxially orientated (also referred to as "BO" or "Bo") in both the MD and the cross direction (CD). Preferably, the mono-axially oriented substrate film has a stretch ratio from 3 to 12, more preferably 4 to 8, in the MD. In the alternative embodiment where the film is biaxially orientated, a suitable stretch magnification ratio (i.e. stretch ratio in MD : stretch ratio in CD) is 3 to 12, preferably 5 to 12. Such degrees of stretching are attainable using rollers for mono-axial orientation (e.g. as described in WO2009/112256, which discloses the use of at least 10 rollers), or in a tenter-frame equipment for biaxial orientation. The high degree of stretching is reflected in the properties of the film, e.g. high tensile strength and low elongation at break. The film may be (co-)extruded and blown or cast before stretching, again e.g. as described in WO2009/112256. Preferably, the film is blown before stretching.

Suitably, the thickness of the substrate film is 10 to 30 µm, more preferably 15 to 25 µm, e.g. 20 µm. It is important to the openability of a laminated packaging material that the substrate film not be too thick, whilst still providing good mechanical properties.

Suitably, the strength at break of the substrate film is 130 to 160 MPa in the MD and/or 20 to 25 MPa in the CD. Suitably the elongation at break of the substrate film is 40 to 90 % in the MD and/or 300 to 1100 % in the CD. MD properties are more important than CD properties. These properties are measured according to ASTM D882 (suitably using Instron 3365 apparatus with a 100 N load cell at a 100 mm/min crosshead rate, the extension being recorded with a video extensometer).

Preferably, the vinyl alcohol polymer barrier coating comprises polyvinylalcohol (PVOH, PVAI and/or polyethylenevinylalcohol (EVOH). EVOH is especially preferred.

Suitable EVOH grades are provided by Kuraray under the trade name EVAL^{™}. Preferably, the ethylene co-monomer content is in the range of 27 to 3244 mol%, more preferably 27 to 32 mol% as such grades provide particularly good oxygen barrier properties and are suitable for use in mono-oriented films. A suitable grade is F171B (with 32 mol% ethylene co-monomer content).

Preferably, the vinyl alcohol polymer barrier coating is co-extruded with the substrate film. This is particularly suitable for EVOH. Alternatively, the vinyl alcohol polymer can be coated on the pre-oriented substrate film e.g. by dispersion coating. This may be suitable for PVOH, which has higher solubility in water than EVOH, and possibly also for EVOH; however, heat drying on a HDPE substrate film is difficult.

Preferably, the thickness of the vinyl alcohol polymer barrier coating is 0.5 to 3 µm, more preferably 1 to 2 µm.

Preferably, the metal of the second barrier coating is aluminium. The vapour deposited barrier coating is preferably applied by means of physical vapour deposition (PVD) or chemical vapour deposition (CVD), for example by plasma enhanced chemical vapour deposition (PECVD). The layer is also referred to herein as "metallised" or "met".

Normally, an aluminium metallised layer inherently has a thin surface portion consisting of an aluminium oxide due to the nature of the metallisation coating process used.

The purpose of a metallisation aluminium coating may be to provide oxygen barrier properties and/or to provide water vapour barrier properties to protect the oxygen barrier inherent to the first barrier coating. As noted above, coatings of gas barrier polymers are often moisture sensitive, such that their oxygen barrier properties deteriorate with an increase of the moisture content in the laminate layers. A metallisation layer on top of such a moisture-sensitive coating efficiently protects the coating against moisture migrating from the wet or liquid food product inside of the packaging container. It is thus important that the metallisation coating fully covers the oxygen barrier coating beneath it and remains intact throughout lamination operations and folding and forming operations, such that the filled packages still have effective barrier properties against the migration of oxygen, as well as water vapour.

Preferably, the thickness of the second barrier coating of vapour-deposited metal is 2 to 200 nm, such as from 2 to 150 nm, such as from 2 to 100 nm, such as from 5 to 80 nm, e.g. 5 to 50 nm, 10 to 50 nm, or 25 to 50 nm.

Such thin coatings will not produce reject or waste when the used laminated packaging materials comprising such coatings are recycled in conventional cellulose fibre recycling streams and they do not require much material in relation to the benefit that they provide.

Generally, below 5 nm the barrier properties of a metallised layer may be too low to be useful and above 200 nm, such as above 100 nm, such as above 50 nm, depending on the type of vapour deposition coating, the barrier coating may be less flexible and thus more prone to cracking, and would also cost more. Also, the thermostability during the metallisation process will be low due to higher heat load when metallising the substrate film for a longer time. The coating quality and adhesion may then be negatively affected.

Preferably, the coating has an optical density of 1.8 to 4, more preferably from 1.8 to 3. Such optical density provides light barrier properties.

A suitable barrier layer is the metallised film supplied by Constantia Flexibles, Austria, as used in the mid-layer of its EcoLamHighPlus material.

A paper or paperboard bulk layer for use in the invention usually has a thickness of from about 100 µm up to about 600 µm, and a surface weight of approximately 100 to 500 g/m² (gsm), preferably about 200 to 300 g/m², and may be a conventional paper or paperboard of suitable packaging quality. The purpose of the bulk layer in the laminated packaging materials of the present invention is to provide dimensional stability, rigidity and stiffness to packaging containers, e.g. for use in wet and humid conditions and/or for storage of liquids and wet (heavy) food products. The paper or paperboard bulk layer may comprise virgin fibres, recycled paper materials, and/or other renewable fibre materials, which are either bleached or non-bleached. The paper or paperboard bulk layer may be obtained from bleached or unbleached chemithermomechanical pulp (CTMP), sulphite or sulphate pulp, i.e., produced using the sulphite or sulphate production process. The paper or paperboard bulk layer may include a clay coating, or a polymeric coating such as starch-based polymer coating (starch coating). A polymeric coating, such as starch-based polymeric coating, may also contain particles such as carbonates or clays, in a minor amount. The paperboard may have a brown coloured natural print surface without clay coat, which may be considered as a raw uncoated printable surface. The paper or paperboard bulk layer may be an unbleached paper board which may be clay-coated, starch-coated, or uncoated, e.g., a clay-coated, a starch-based polymer coated, or an uncoated unbleached CTMP, or a clay-coated, a starch-based polymer coated, or an uncoated unbleached kraft paper board, or a clay-coated duplex paperboard. The paper or paperboard bulk layer may be an unbleached liquid packaging board (LPB), which may be coated with starch-based polymeric coating, or is uncoated. Clay-coated duplex paperboard is preferred. For larger packages a paperboard of 400 to 500 µm is preferred. For portion packs of 150 to 250 mL size, a bending stiffness of 80 mN is preferred.

The outer- and innermost liquid-tight layers of thermoplastic polymers do not normally add recognizable barrier properties to migrating gas molecules or small molecules. Their purpose is to provide a direct barrier to water or other liquids from penetrating through to the cellulose-based bulk material and other sensitive layers and to act as an aseptic barrier, maintaining package integrity to protect the filled contents inside the package. The liquid barrier layers also prevent water vapour from migrating to the cellulose to the extent that it gets wet, but they are not capable of keeping the moisture content of the laminated structure at zero or at the low level of "dry" paper (which is at about 7-8 % in an environment at ambient temperature, i.e. 23°C/50% relative humidity). The moisture content in the laminated carton material of a packaging container filled with liquid is usually rather high and migration through the material occurs, unless there is a further water vapour barrier included, such as the vapour deposited metallisation layer.

The outermost layer may be a layer or coating of a protective polymer, to prevent dirt and moisture from reaching the interior of the laminated material, such as a polymer layer, such as a thermoplastic polymer layer, such as a liquid-tight and heat-sealable polymer layer, discussed in more detail below.

The innermost liquid-tight and heat-sealable material layer comprises polyethylene and preferably consists of polyethylene. The innermost layer may comprise two or more sub-layers. Optionally, one sub-layer may be extruded at a higher temperature than the other. The sub-layers may be of two different compositions, e.g. an LDPE layer and an innermost blend layer, or two blend layers of different compositions.

Suitable thermoplastics for the outermost liquid-tight and heat-sealable layer are polyolefins such as polyethylene and polypropylene (PP) homo- or co-polymers, preferably polyethylenes and more preferably polyethylenes selected from the group consisting of LDPE, LLDPE, m-LLDPE and blends or copolymers thereof. According to an embodiment, the outermost liquid-tight and heat-sealable layer is of LDPE, while the innermost heat sealable, liquid-tight layer is a blend composition of m-LLDPE and LDPE for optimal lamination and heat sealing properties. In a preferred embodiment, the innermost layer comprises 50 to 90 wt% mLLDPE and 10 to 50 wt% LDPE, for example 70 wt% mLLDPE and 30 wt% LDPE. However, lower proportions of mLLDPE such as 10 to 50 wt% e.g. 30 wt% in such blends are also envisaged.

The outermost layer is preferably transparent. In this way, any printed décor pattern applied onto the outside of the bulk layer can be seen. This is useful in informing viewers e.g. about the contents of the package, the packaging brand and other consumer information relevant in retail facilities and/or food shops. In an embodiment, a separate thin print substrate paper layer is used together with a cheaper brown bulk layer not having a clay coat for printing. The print substrate layer is laminated to the bulk layer, e.g. by wet lamination with aqueous adhesive (such as starch or ethylene vinyl acetate copolymer, EVAc). By omitting the clay coat, the use of inorganic particles can be avoided.

The outermost layer is typically applied at a thickness of from 5 to 20 µm, such as from 10 to 15 µm, or 5 to 15 g/m², such as from 8 to 15 g/m². The innermost layer may be applied at thicknesses ranging from 10 to 50 µm, such as from 15 to 40 µm, such as from 20 to 40 µm, or 10 to 50 g/m², such as 15 to 45 g/m², such as 20 to 45 g/m², or 20 to 40 g/m².

The outermost and/or innermost layers are preferably applied by extrusion coating.

The metal coating of the barrier layer may be bonded to the bulk layer by an intermediate bonding layer, preferably of thermoplastic polymer. According to an embodiment the intermediate bonding layer is a polyolefin layer. The same thermoplastic polyolefin-based materials as listed for the outermost and innermost layers, and in particular polyethylenes, are also suitable for the intermediate bonding layer.

The intermediate bonding layer may bond the bulk layer to the barrier layer by melt extrusion laminating the intermediate bonding layer between a web of the bulk layer and a web of the barrier layer, and simultaneously pressing the three layers together while being forwarded through a lamination roller nip, thus providing a laminated structure by extrusion lamination.

In an alternative preferred embodiment, the intermediate bonding layer comprises two sub-layers. These are preferably applied at different temperatures. Preferably a higher temperature (e.g. 325 °C) is used for the sub-layer adjacent to the bulk layer, and a lower temperature (e.g. 300 °C) is used for the sub-layer adjacent to the metal coating layer.

The intermediate bonding layer may typically be applied at a total amount from 10 to 25 µm, such as from 10 to 20 µm, such as from 10 to 15 µm, or 9 to 23 g/m², such as 9 to 20 g/m², such as 9 to 18 g/m² or 9 to 14 g/m². Where two sub-layers are used, these may for example be applied in amounts of 13 gsm and 7 gsm respectively, or two sub-layers each of 7.5 gsm may be applied.

As an alternative to an intermediate bonding layer of thermoplastic, wet lamination of the bulk layer to the barrier layer using an aqueous adhesive composition is possible. In one embodiment, the barrier-coated film may be dispersion coated with an aqueous adhesive polymer or binder composition, which is then laminated to the inner side of the bulk layer by pressing the surfaces together in a lamination roller nip. The advantage of such wet lamination is the reduced need for polymeric materials in the laminated structure, as well as potential redispersibility of the thin adhesive layer in a later recycling step, for recovery of the cellulose fibres of the bulk layer.

In a preferred embodiment, bonding or tie layers in the interior of the laminated material are avoided, especially between the barrier layer and innermost layer. Such tie layers are typically of so-called adhesive thermoplastic polymers, such as modified polyolefins, which are mostly based on LDPE or LLDPE co-polymers or graft co-polymers with functional-group containing monomer units, such as carboxylic or glycidyl functional groups, such as (meth)acrylic acid monomers or maleic anhydride (MAH) monomers, (e.g. EAA, EMAA, ethylene-glycidyl(meth)acrylate copolymer (EG(M)A) or MAH-g-PE). Other examples of such modified polymers or adhesive polymers are so called ionomers or ionomer polymers.

Preferably, no adhesive polymer (such as modified polyolefin; more preferably no adhesive polymer, primer or anchoring agent other than polyethylene) is present between the barrier layer substrate film and the innermost layer. In a preferred embodiment, the barrier layer substrate film is immediately adjacent to the innermost layer.

Also, preferably no adhesive polymer is present between the second barrier coating and the intermediate bonding layer.

In a preferred embodiment, EAA and/or EMAA are not present in the laminated packaging material. More preferably, no adhesive polymer is present in the laminated packaging material.

Preferably, the outermost layer, innermost layer, intermediate bonding layer and/or barrier layer substrate film (and preferably the laminated packaging material as a whole) do not include carbon black and/or titanium dioxide. More preferably, these layers (and again, preferably the laminated packaging material as a whole) do not include any particulate filler and/or pigment, other than an optional clay coating on the bulk layer to provide a white print surface.

In a preferred embodiment, the laminated packaging material consists of cellulose-based bulk material, polyethylene-based material, vinyl alcohol polymer and metal.

Preferably, the laminated packaging material comprises at least 70 wt% cellulose-based material (including optional clay coating) and remainder polyethylene-based material and vinyl alcohol polymer, except for up to 1 wt% of other material. More preferably, the laminated packaging material comprises 72 wt% cellulose material and 28 wt% polyethylene-based material and vinyl alcohol polymer. In preferred embodiments, the vinyl alcohol polymer content is around 3-4 wt% of the polyethylene fraction e.g. 3.1 wt% or 3.9 wt%. The metal content is very low e.g. 0.17 wt% of the polyethylene fraction.

In a preferred embodiment, the laminated packaging material comprises at least one laminated opening hole in which a hole in the bulk layer is covered by the other layers of the laminated packaging material.

Preferably, the oxygen transmission rate of the laminated packaging material at 100 % O₂/23 °C/50% RH is 0.5 cm³/(m^{2.}24h) or less, more preferably 0.4 cm³/(m^{2.}24h) or less, most preferably 0.3 cm³/(m^{2.}24h) or less.

Preferably, the water vapour transmission rate of the laminated packaging material at 38 °C/90% RH is 2.5 g/(m^{2.}24h) or less, more preferably 2 g/(m^{2.}24h) or less, most preferably 1.5 g/(m^{2.}24h) or less.

The method of making the laminated packaging material comprises lamination of the bulk layer, barrier layer, outermost layer and innermost layers, and may also comprising coating of the barrier layer substrate layer with one or more of the barrier coatings. The layers of the laminated packaging material may be joined in any order.

In a preferred embodiment, the bulk layer and barrier layer are laminated, followed by application of the innermost layer and then the outermost layer (or less preferably followed by application of the outermost layer and then the innermost layer). This order is referred to as "LID" wherein L= lamination of paperboard to barrier layer by intermediate bonding layer; I = application of innermost layer to barrier layer; D (décor) = application of outermost layer onto paperboard. The less preferred alternative is referred to as "LDI".

Alternatively, the bulk layer may be initially joined to the outermost layer. This order is referred to as "DLI". This order is particularly suitable when the outermost layer is a dispersion coated thin layer. In this case, dispersion coating may follow printing of the bulk layer, as printing and dispersion coating are similar coating processes. Extrusion coating of the outermost layer is also possible. DLI is further suitable to protect the printed décor on the paperboard, such that it will not be scratched or scuffed or in the following lamination stations.

Where a separate print substrate layer is included this is typically joined to the bulk layer (e.g. by wet lamination) before the steps set out above.

According to a further embodiment, the packaging container formed from the laminated packaging material may be partly sealed, filled with liquid or semi-liquid food and subsequently sealed, by sealing of the packaging material to itself, optionally in combination with a plastic opening or top part of the package. Ultrasonic heat sealing is preferred.

Preferably, the package product loss is less than 5 g over 12 months.

To conclude, robust and reliable packages, having excellent oxygen gas barrier, for liquid food packaging for long term shelf-life and storage may be obtained in preferred embodiments of the invention.

### Examples and description of preferred embodiments

In the following, preferred embodiments of the invention will be described with reference to the drawings, in which:
Fig. 1 shows a cross-section of a laminated packaging material of a preferred embodiment of the invention.
Figs. 2a and 2b show the process for the lamination steps in the manufacturing of the laminated packaging material of Fig. 1.
Fig. 3a, 3b, 3c and 3d are showing typical examples of liquid carton packaging containers produced from the laminated packaging material of Fig. 1.
Fig. 4 is showing the principle of how such liquid carton packaging containers are manufactured from the laminated packaging material of Fig. 1 in a continuous, roll-fed, form, fill and seal process.
Fig. 5 is a diagrammatic view of an example of a plant for physical vapor deposition to form the barrier layer of the laminated packaging material of Fig. 1.
Fig. 6 is a graph showing package weight loss results for the Example 1 laminated packaging material F2356-2 and comparative laminated packaging materials.
Fig. 7 is a graph showing opening force results for the Example 1 laminated packaging material F2356-2 and a comparative laminated packaging material.

### Measurement Methods

Grammages of papers are determined according to the official test method of ISO 536:2019 in the unit g/m², while thickness and density are determined according to ISO 534:2011, in the units µm and kg/m³, respectively.

Thickness measurements of layers may be measured and estimated by taking sliced section samples of the structure and studying them in a SEM microscope. The slicing may be done using e.g. a cryo microtome.

The optical density is measured in production by means of a densitometer, i.e. an instrument (such as from Macbeth, Tobias or similar), which uses the principle of diffuse light transmission. The instrument is suitable for measuring the optical density values of films coated with aluminium metallisation. The accuracy and precision of the measurements is high and about +/- 0.2 OD and about +/-0.01 OD, respectively, within a measuring range from 0 to 6.60 OD. In lab measurements, a spectrophotometer may alternatively measure the light transmission over the full visible spectrum (380-800 nm). The optical density is calculated from the light transmission (T, also referred to as I₁/I₀ i.e. ratio of incident light to transmitted light) value at 560 nm, according to a formula OD= - log₁₀(I₁/I₀) and the values obtained are equally accurate (+/- 0.2 OD) and comparable to light transmission densitometer values.

Oxygen transmission rate is measured with an Oxtran 2/22 (Mocon) equipment based on coulometric sensors, according to ASTM F1927-14 at 100% oxygen gas at 23°C/50% RH.

Water vapour transmission rate is measured according to ASTM F1249 at 38°C/90% RH.

### Adhesion Peel Test

Laminates were treated for periods of time with a standard solution (stored at 40 °C) containing free fatty acids, the short-term adhesion results of which correlate well with the results of long-term storage of juice from oranges or other citrus fruits.

The adhesion peel test was made in the machine direction according to ASTM D903 with the following settings:
- 180° peel angle
- peel speed 100 mm/min
- width of 15 mm

Peel force is measured in the unit N/m. Peel force can be measured for "inside adhesion" between the barrier layer and the innermost layer, and also for "outside adhesion" between the barrier layer and the intermediate bonding layer.

### Package Weight Test

This is a simplified test to monitor how water vapour transmission from a filled package affects water content of filled liquid product.

10 packages filled with water and numbered from 1 to 10 are stored per variant per climate. Packages must be conditioned for 24 h in the storage climate before the initial weighing. The test is performed under a Tetra Pak standard climate: 23°C/50% RH. The same samples are weighed every 2 weeks for 4 months and the package weights reported. Package Weight Loss = Package Weight at Time x - Package Weight at Time

Shelf life is estimated by linear extrapolation of package weight loss to the storage time where 5 g of package weight would be lost.

### Straw Puncture Test for Openability

The following test method is used to determine the maximum force needed to puncture or first penetrate the membrane of the laminated straw hole (also referred to as "PPH", pre-punched hole).

The tested laminated materials were provided during manufacturing and converting operations with pre-cut, laminated straw holes, one per package unit. Thus, the bulk layer of paper or paperboard was pre-cut at intervals to obtain one small hole per package unit, having a diameter of 6 mm, suitable for an opening for a drinking straw. In the subsequent lamination operations, to form the laminates that were tested herein, these straw holes were over-laminated, i.e. covered by all the other layers of the laminate. Within the paperboard hole area, the outermost LDPE layer was adhered to the LDPE intermediate bonding layer to form a laminated membrane together with the barrier layer and innermost layer. A standard compression testing machine (Zwick Roell) was used to evaluate the maximum force required for opening the membrane by penetration with a slant-cut paper straw of diameter about 5 mm.

### Example 1

An example CFL laminated packaging material F2356-2/PM012036 was prepared with the following structure:
LDPE 12 gsm / paperboard / LDPE 13 gsm / LDPE 7 gsm / metallised Al layer on substrate film of: / co-extruded mono-oriented EVOH 1-2 µm and mono-oriented HDPE 20 µm / extrusion coated blend of 70 wt% mLLDPE and 30 wt% LDPE 25 gsm/

The paperboard was standard clay-coated duplex paperboard BK-G from Billerud of bending stiffness 80 mN and basis weight 200 g/m².

The barrier layer (HDPE-EVOH-met) was metallised film supplied by Constantia Flexibles, Austria, as used in the mid-layer of its EcoLamHighPlus material.

The layers were laminated in the order "DLI" i.e. extrusion coating of outermost LDPE (décor, D) layer onto paperboard; lamination (L) of paperboard to barrier layer by LDPE intermediate bonding layers; extrusion coating of innermost (I) blend polymer layer onto the barrier layer.

The example laminated packaging material was compared with comparative example CFI laminated packaging material F2356-4 having the following structure:
LDPE 12 gsm / paperboard / LDPE 13 gsm / LDPE 7 gsm / co-extruded mono-oriented HDPE 20 µm and mono-oriented co-extruded EVOH 1-2 µm / metallised Al layer on co-extruded substrate film / EAA 6 gsm / blend of 70 wt% mLLDPE and 30 wt% LDPE 19 gsm/

This corresponds to the example laminated packaging material but with the barrier layer (HDPE-EVOH-met) in the opposite arrangement (CFI rather than CFL), and an EAA adhesive layer included to bond the metallised Al layer to the mLLDPE-comprising innermost layer. EAA is necessary for long term adhesion in this arrangement.

Long term adhesion for the example and comparative example was tested using the adhesion peel test by the peel arm pulling the "inside material portion" comprising the barrier-coated film and the innermost layer of the mLLDPE + LDPE blend away from the bulk layer coated with the intermediate bonding layers of LDPE. The results are shown in Table 1.

**Table 1**

| **Sample** | **Peel force levels [N/m] ± SD - exposure periods in days (40°C)** | | | | | |
|---|---|---|---|---|---|---|
| | 0 | 1 | 3 | 7 | 1 0 | 2 1 |
| F2356-2 (Example 1) | 10 0 ± 8¹ | 6 2 ± 8² | 64 ± 22 | 72 + 7² | 7 9 ±7² | 6 3 ± 3² |
| F2356-4 (Comparative) | 24 ± 3³ | 2 5 ± 1³ | 35 ± 16³ | 24 ± 3³ | 2 7 ± 6³ | 0 + 0⁴ |

1: Peel force between laminate PE (intermediate bonding layer) - metallisation and EVOH - metallisation
2: Peel force between laminate PE - metallisation
3: Peel force between EVOH - metallisation
4: Peel force between metallisation - EAA

For the example, high inside adhesion was seen between the metallised Al layer and innermost mLLDPE-comprising layer, even after 21 days, such that the adhesion failure rather occurred between the intermediate lamination layer of LDPE and the metallisation coating (outside adhesion). The initial adhesion strength was very high, such that the adhesion was broken varyingly at about as high as 100 N/m, between the metallisation layer and the intermediate LDPE layers, or between the metallisation coating and the EVOH barrier layer of the film. For the comparative example, no adhesion was seen between the metallised Al layer and inner EAA layer after 21 days. Although the initial adhesion within the "inside material portion" was higher, and such that the adhesion failure rather occurred between the EVOH barrier layer and the metallisation, the inter-layer adhesion of the inside material portion still failed at rather low adhesion values around 25 N/m. Thus, the laminated packaging material of the inventive example was significantly more robust against long term adhesion failure caused by migration of free fatty acids.

Oxygen transmission rate of the example laminated packaging material was measured at 100 % O₂/23 °C/50% RH and an average value of 0.28 cm³/(m^{2.}24h) was found.

Water vapour transmission rate of the example laminated packaging material was measured at 38 °C/90% RH and an average value of 0.15 g/(m²·24h) was found.

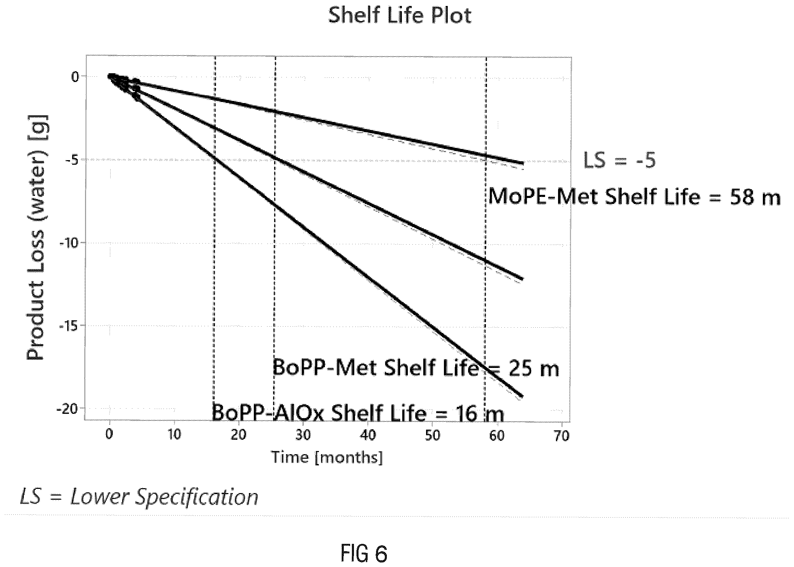

Product loss was tested using the package weight test on laminated packaging materials having barrier layers of MoPE-Met (PM12036, according to invention), BoPP-Met (PM11974, comparative), and BoPP-AlOx (PM12041, comparative; AlOx is aluminium oxide). The results are shown in Fig. 6. For the preferred barrier layer of MoPE-Met, the shelf life was 58 months. For the comparative barrier layers, the shelf lives were 25 months (BoPP-Met) and 16 months (BoPP-AlOx). This confirms that a barrier layer of MoPE-Met as in preferred embodiments of the invention provides better water vapour barrier properties, leading to less product loss and a longer shelf life.

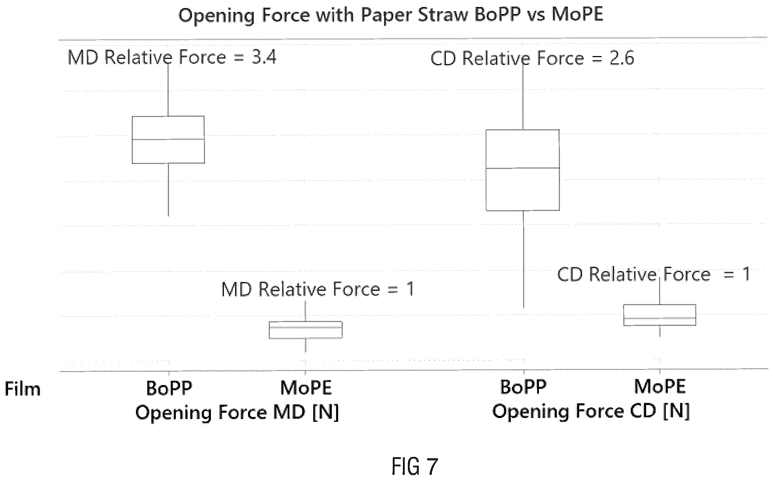

Openability by a drinking straw of paper was tested using the straw puncture test on laminated packaging materials having barrier layers of MoPE-Met (according to invention) and BoPP-Met (comparative). The results are shown in Fig. 7. The BoPP film required a high opening force and caused the paper straw tips to deform or bend backwards. The MoPE film used in the barrier layer of preferred embodiments of the invention had a much lower opening force (3.4 times lower in MD; 2.6 times lower in CD) and would not be challenging for a consumer to open.

### Example 2

A second example CFL laminated packaging material PM012040 was prepared with the following structure:
LDPE 12 gsm / paperboard / LDPE 7.5 gsm / LDPE 7.5 gsm / metallised Al layer on substrate film of: / co-extruded mono-oriented EVOH 1-2 µm and mono-oriented HDPE 20 µm / extrusion coated blend of 70 wt% mLLDPE and 30 wt% LDPE 15 gsm /

This laminated packaging material uses less LDPE (including mLLDPE) compared with the laminated packaging material of Example 1, and therefore has a higher proportion of renewable cellulose-based material.

Further, relating to the attached figures:

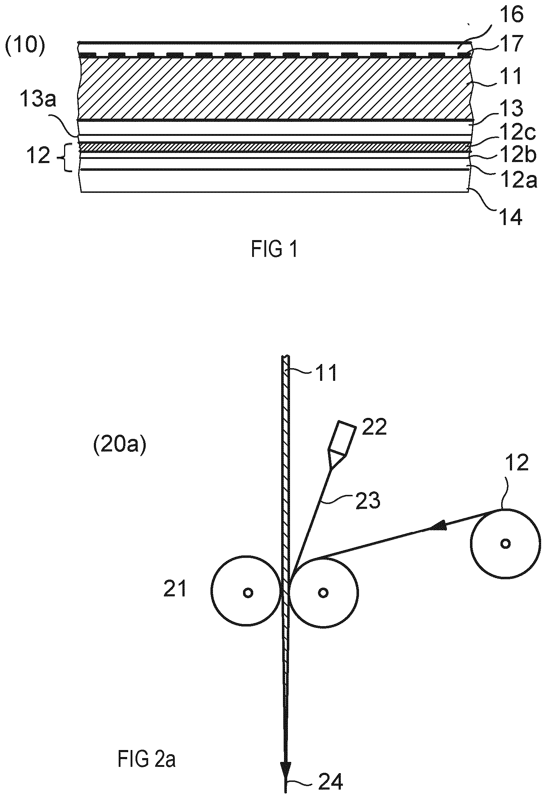

In Fig. 1, a laminated packaging material 10 for liquid carton packaging is shown in cross-section, in which the laminated material comprises a paperboard bulk layer 11, having a bending force of 80 mN and a grammage weight of about 200 g/m², and further comprising an outer liquid-tight and heat-sealable layer 16 of polyolefin applied on the outside of the bulk layer 11, which side is to be directed towards the outside of a packaging container produced from the packaging laminate. The layer 16 is transparent to show the printed décor pattern 17, applied onto the outside of the bulk layer of paperboard.

The polyolefin of the outer layer 16 is a conventional low density polyethylene (LDPE) of a heat sealable quality, but could also include further similar polymers, including LLDPEs. It is applied at an amount of about 12 g/m².

A barrier layer 12 is arranged on the opposite side of the bulk layer 11 from the outer layer 16. The barrier layer 12 comprises an oriented HDPE substrate film 12a arranged furthest from the bulk layer 11, a first barrier coating 12b of co-extruded EVOH on the substrate film 12a, and a second barrier coating 12c of metallised Al on the first barrier coating 12b. The second barrier coating 12c is arranged closest to the bulk layer 11 (coating facing laminate, CFL), and is adhered to the bulk layer 11 by an intermediate bonding layer 13 (optionally comprising an additional sub-layer 13a) of LDPE.

An innermost liquid-tight and heat-sealable layer 14 is arranged on the side of the barrier layer 12 which is to be directed towards the inside of a packaging container produced from the packaging laminate, i.e. the layer 14 will be in direct contact with the packaged product. The thus innermost heat sealable layer 14, which is to form strong transversal heat seals of a liquid packaging container made from the laminated packaging material, comprises one or more in combination of polyethylenes selected from the groups consisting of LDPE, LLDPE, and m-LLDPE. The innermost heat-sealable layer 14 may consist of one layer or alternatively of two or more part-layers of the same or different kinds of LDPE or LLDPE or blends thereof, and is well-adhered to the substrate film 12a of the barrier layer 12 without an intermediate coextruded tie layer e.g. of ethylene acrylic acid copolymer (EAA). It is applied at an amount of 15 or 25 g/m².

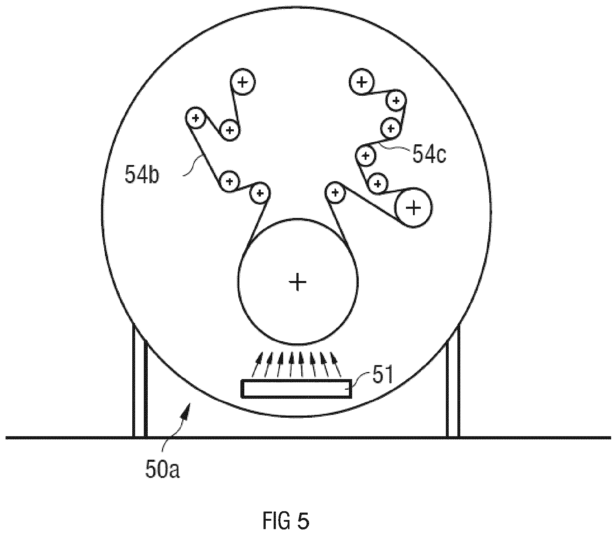

Turning to production of the barrier layer, Fig. 5 is a diagrammatic view of an example of a plant 50a for PVD of e.g. an aluminium metal coating, onto a barrier layer substrate film. The substrate film 54b (12a/b) is subjected, on its pre-coated side, to continuous evaporation deposition, of vaporised aluminium, to form a metallised layer of aluminium (12c). A barrier-coated substrate film 54c (12) of the invention is formed. The aluminium vapour may be formed from ion bombardment of an evaporation source of a solid piece of aluminium 51.

Fig. 2a shows a part of the process for the lamination steps in the manufacturing of the laminated packaging material 10 of Fig. 1, as the bulk layer 11 is laminated to the barrier layer 12.

The bulk layer 11 is laminated to the barrier layer 12 by an intermediate bonding layer 13; 23 of LDPE. The intermediate bonding layer 13 is formed by melt extrusion of a thin polymer melt curtain between the webs comprising the bulk layer 11 and the barrier layer 12, respectively, and thus laminating the bulk layer 11 and barrier layer 12 to each other, as all three layers pass through a nip 21 between a press roller and a chilled roller, thus cooling the laminated material 24 to properly solidify the extruded intermediate bonding layer 13 of LDPE. The amount of intermediate bonding layer 13 is 20 g/m², corresponding to a thickness of about 21.7 µm. In an alternative embodiment, two sub-layers of LDPE are used for the intermediate bonding layer 13; 23 to lower the thermal load on the barrier layer.

The resulting pre-laminate 24 is forwarded to be wound up on a reel for intermediate storage, or directly to subsequent lamination operations.

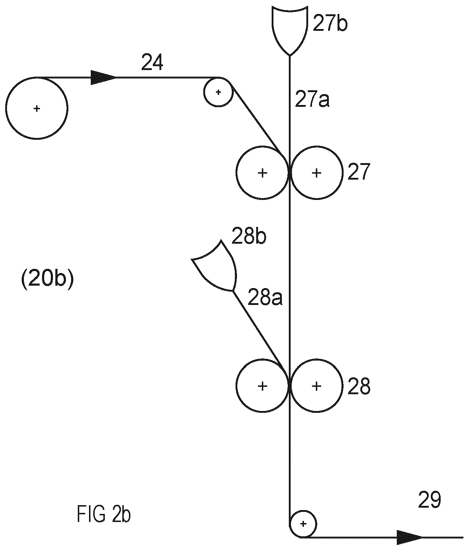

In Fig. 2b, the resulting web of pre-laminate 24, of bulk layer 11 and barrier layer 12, is forwarded to further lamination steps, either directly from the lamination operation of Fig. 2a, or from engaging and unwinding from an intermediate storage reel.

The non-laminated side of the bulk layer 11, i.e. its print side, is joined at a cooled roller nip 27 to a molten polymer curtain 27a of the LDPE which is to form the outermost layer 16 of the laminated packaging material 10, the LDPE 27a being extruded from an extruder feedblock and die 27b.

Subsequently, the pre-laminate, now having the outermost layer 16 coated on its printed side, the outside, passes a second extruder feedblock and die 28b and a lamination nip 28, where a molten polymer curtain 28a is joined and coated onto the other side of the pre-laminate, i.e. on the uncoated, inner side of the barrier layer 12. Thus, the innermost heat sealable layer(s) 14 are coextrusion coated onto the barrier layer substrate film of the barrier layer, to form the finished laminated packaging material 29; 10, which is finally wound onto a storage reel, not shown.

These two coextrusion steps at lamination roller nips 27 and 28, may alternatively be performed as two consecutive steps in the opposite order, and may be performed before or after lamination of the two webs at lamination roller nip 21 as shown in Fig. 2a.

The bulk layer 11 may be provided with holes (not shown) which are overlaminated by the other layers of the laminated packaging material 10 to form pre-laminated holes.

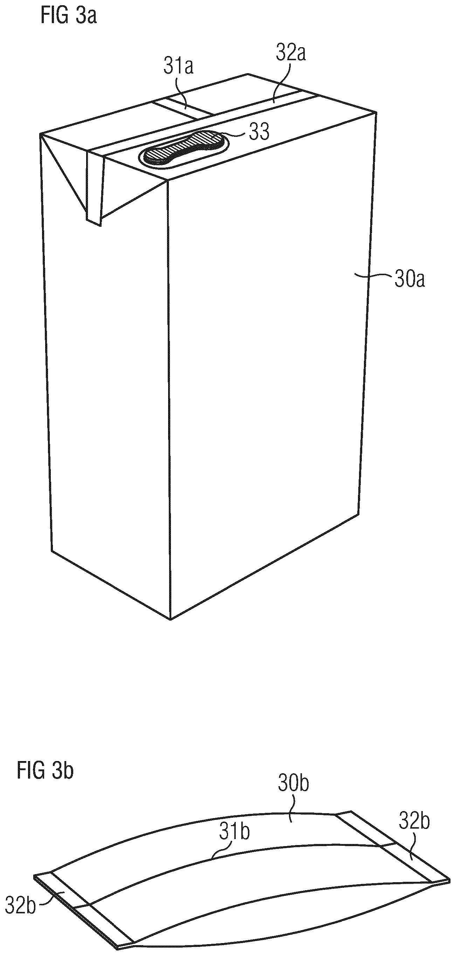

Fig. 3a shows an embodiment of a packaging container 30a produced from a packaging laminate 10 according to the invention. The packaging container is particularly suitable for beverages, sauces, soups or the like. Typically, such a package has a volume of about 100 to 1000 mL. It may be of any configuration, but is preferably brick-shaped, having longitudinal and transversal seals 31a and 32a, respectively, and optionally an opening device 33 over a pre-laminated hole (not shown). In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still is easy to handle and dimensionally stable enough to put on a shelf in the food store or on any flat surface.

Fig. 3b shows an alternative example of a packaging container 30b produced from an alternative packaging laminate 10 according to the invention. The alternative packaging laminate is thinner by having a thinner paper bulk layer, and thus it is not dimensionally stable enough to form a parallellepipedic or wedge-shaped packaging container, and is not fold formed after transversal sealing 32b. The packaging container will remain a pillow-shaped pouch-like container and be distributed and sold in this form.

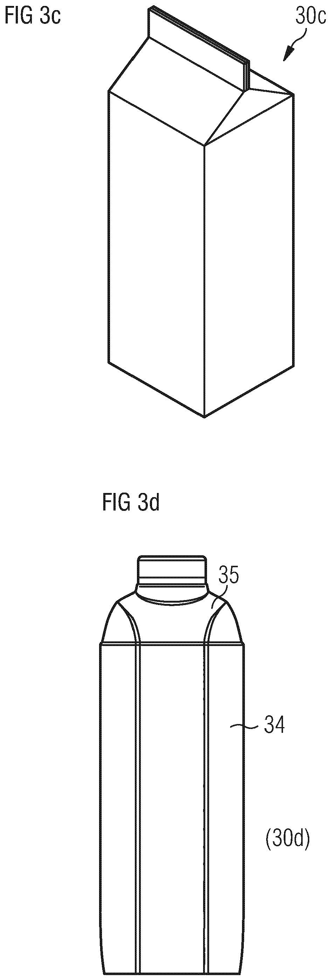

Fig. 3c shows a gable top package 30c, which is fold-formed from a pre-cut sheet or blank, from the laminated packaging material 10 comprising a bulk layer of paperboard 11 and the barrier layer 12 of the invention. Optionally an opening device and/or a pre-laminated hole (not shown) may be present. Also flat top packages may be formed from similar blanks of material.

Fig. 3d shows a bottle-like package 30d, which is a combination of a sleeve 34 formed from a pre-cut blanks of the laminated packaging material 10 of the invention, and a top 35, which is formed by injection moulding plastics in combination with an opening device such as a screw cork or the like. These types of packages are for example marketed under the trade names of Tetra Top^{®} and Tetra Evero^{®}. Those particular packages are formed by attaching the moulded top 35 with an opening device attached in a closed position, to a tubular sleeve 34 of the laminated packaging material, sterilizing the thus formed bottle-top capsule, filling it with the food product and finally fold-forming the bottom of the package and sealing it.

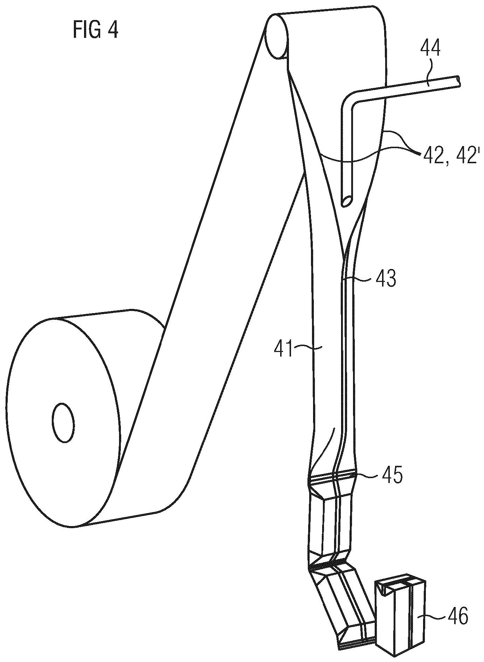

Fig. 4 shows the principle as described in the introduction of the present application, i.e. a web of packaging material is formed into a tube 41 by overlapping the longitudinal edges 42, 42' of the web and heat sealing them to one another, to thus form an overlap joint 43. The tube is continuously filled 44 with the liquid food product to be filled and is divided into individual, filled packages by repeated, double transversal seals 45 of the tube at a predetermined distance from one another below the level of the filled contents in the tube. The packages 46 are separated by cutting between the double transversal seals (top seal and bottom seal) and are finally shaped into the desired geometric configuration by fold formation along prepared crease lines in the material.

In the preferred embodiments, various advantages are achieved:
- The laminated packaging material is recyclable. The laminated packaging material has a high proportion of recyclable and renewable (i.e. plant-based) materials, consisting mainly of polyethylene and paper with a very small amount of aluminium metal (for Example 1, this is about 0.17 wt% of polyethylene fraction or 0.05 wt% of laminate, compared with about 23 wt% of polyethylene fraction or 6.3 wt% of laminate when 6.3 µm aluminium foil is used) and EVOH (about 3 wt% of polyethylene fraction) which can be recycled with the polyethylene. Essentially only one type of polymer (PE) is used in addition to the cellulose fibres. The HDPE barrier substrate layer is adjacent to the innermost extruded mLLDPE-comprising layer; these layers are compatible, meaning that the use of EAA or other adhesive to join the barrier layer and innermost layer can be avoided. There are therefore fewer layers in the laminate. Avoiding adhesive use has further production advantages, including less complexity in raw material handling, and less need for purging of the screws. The absence of pigment or filler particles, and especially the absence of carbon black, is important for recycling. Clear, natural or paler colours are compatible with PE or PP mechanical recycling; black and darker colours have limited compatibility; carbon black containing material is not compatible with PE or PP mechanical recycling (Designing for a Circular Economy: Recyclability of polyolefin-based flexible packaging, D4ACE guidelines, CEFLEX, 2020).
- Straw hole openability is good, because the mono-orientation of HDPE gives a lower opening force which enables the use of paper straws without the need for other processes to weaken the PPH. It was previously difficult to keep the balance between package integrity and openability, and cumbersome solutions regarding materials in connection to opening holes and perforations were developed, such as pre-cuts and perforations in single layers or other pre-treatments of material layers, for the purpose of achieving sufficient openability. Such difficulties were pronounced when using biaxially oriented polymer film substrates for the stable carrying of thin vapour deposited gas barrier coatings.
- The metallised aluminium layer and EVOH layer together provide good oxygen and water vapour barrier properties.
- There is low product loss, because the oriented HDPE has a low water vapour transmission rate compared for example with barrier substrates of paper, LDPE or LLDPE.
- The metallised aluminium layer is not sensitive to humidity, as AlOx vapour deposited layers are (B.M. Henry et al, Thin Solid Films 382 (2001) 194-201*;* Nehm et al., ACS Appl. Mater. Interfaces 2015, 7, 22121-22127*).* This is important in liquid packaging.
- The metallised aluminium layer provides a light barrier, meaning that the inclusion of filler and pigment can be avoided. AlOx does not provide a light barrier.
- Delamination of EAA adhesive over time caused by free fatty acids (FFA) from fruit juice or other acidic food contents is avoided, because no such adhesive is used. As discussed in the introduction, such delamination is a problem for long term storage, and also affects openability. The problem is specific to metal and metallised layers, because FFA migrate to the EAA/metal interface and cannot pass into the metal, so accumulate at the interface. It can be addressed by using an adhesive polymer having carboxylic acid functionality; if a long term shelf life is needed, higher acid content of the adhesive polymer will be needed. However, eventually, the adhesion between the metal and the insides will be lost, because the concentration of FFA becomes too high. By contrast, in the preferred embodiment of the present invention, good long term interlayer adhesion is maintained, with the use of EAA being avoided. The oriented HDPE is thought to help to stop the migration to the metallisation coating more effectively in that this occurs more gradually over time.

Barrier films similar to those used in the invention (e.g. from Constantia) are known for use in dry food products. However, it is very challenging to transfer them from dry food to liquid food applications, because of the food interaction discussed above.

Thus, preferred embodiments of the invention provide non-foil paper- or paperboard-based laminated packaging materials for oxygen-sensitive, liquid, semi-solid or wet food products, which do not contain aluminium foil but nevertheless have excellent oxygen and water vapour barrier properties suitable for long-term, aseptic packaging, at reasonable cost, with good recyclability and a sustainable environmental profile. The laminates are cost-efficient, mechanically robust, heat-sealable and have good openability.

As a final remark, the invention is not limited by the embodiments shown and described above, but may be varied within the scope of the claims.

## Claims

1. A laminated packaging material for packaging of liquid or semi-liquid food products, comprising as layers of a layer sequence:
- an outermost liquid-tight polymer layer;
- a bulk layer of paper or paperboard or other cellulose-based material;
- a barrier layer comprising an oriented substrate film comprising 50 to 100 wt% high density polyethylene (HDPE), a first barrier coating of vinyl alcohol polymer on the substrate film, and a second barrier coating of vapour-deposited metal on the vinyl alcohol barrier coating, the barrier layer being arranged with the metal barrier coating towards the bulk layer and the substrate film toward the innermost layer; and
- an innermost liquid-tight, heat-sealable polymer product contact layer comprising polyethylene.

2. A laminated packaging material as claimed in Claim 1, wherein the substrate film is mono-axially oriented, preferably with a stretch ratio of 3 to 12.

3. A laminated packaging material as claimed in Claim 1 or Claim 2 comprising at least 70 wt% cellulose-based material and remainder polyethylene-based material and vinyl alcohol polymer, except for up to 1 wt% of other material, the laminated packaging material preferably comprising 72 wt% cellulose material and 28 wt% polyethylene-based material and vinyl alcohol polymer.

4. A laminated packaging material as claimed in any one of the preceding claims consisting of cellulose-based bulk material, polyethylene-based material, vinyl alcohol polymer and metal.

5. A laminated packaging material as claimed in any one of the preceding claims, wherein the barrier layer substrate film comprises 60 to 100 wt% HDPE, preferably 80 to 100 wt% HDPE, and more preferably 90 to 100 wt% HDPE.

6. A laminated packaging material as claimed in any one of the preceding claims, wherein the vinyl alcohol polymer barrier coating is co-extruded with the oriented substrate film or is dispersion coated on the oriented substrate film.

7. A laminated packaging material as claimed in any one of the preceding claims, wherein the metal is aluminium.

8. A laminated packaging material as claimed in any one of the preceding claims, wherein the barrier layer substrate film is immediately adjacent to the innermost layer.

9. A laminated packaging material as claimed in any one of the preceding claims, wherein no adhesive polymer is present between the barrier layer substrate film and the innermost layer.

10. A laminated packaging material as claimed in any one of the preceding claims, wherein ethylene acrylic acid copolymer (EAA) and/or ethylene methacrylic acid copolymer (EMAA) are not present in the laminated packaging material.

11. A laminated packaging material as claimed in any one of the preceding claims, wherein the innermost layer is extrusion coated.

12. A laminated packaging material as claimed in any one of the preceding claims, wherein the innermost layer comprises low density polyethylene (LDPE), and more preferably comprises metallocene linear low density polyethylene (mLLDPE).

13. A laminated packaging material as claimed in Claim 12, wherein the innermost layer comprises a blend of mLLDPE and LDPE, preferably 50 to 90 wt% mLLDPE and 10 to 50 wt% LDPE, more preferably 70 wt% mLLDPE and 30 wt% LDPE.

14. A laminated packaging material as claimed in any one of the preceding claims, wherein the outermost layer comprises polyolefin, preferably polyethylene, more preferably LDPE.

15. A laminated packaging material as claimed in any one of the preceding claims, wherein the metal barrier coating is bonded to the bulk layer by an intermediate bonding layer.

16. A laminated packaging material as claimed in any one of the preceding claims, wherein the intermediate bonding layer comprises polyolefin, preferably polyethylene, more preferably LDPE.

17. A laminated packaging material as claimed in any one of the preceding claims, wherein the intermediate bonding layer comprises two sub-layers, wherein preferably the two sub-layers are applied at different temperatures, more preferably with the sub-layer adjacent to the bulk layer being applied at a higher temperature than the sub-layer adjacent to the metal barrier coating.

18. A laminated packaging material as claimed in any one of the preceding claims, wherein the outermost layer, innermost layer, intermediate bonding layer and/or barrier layer substrate film do not include carbon black and/or titanium dioxide.

19. A laminated packaging material as claimed in any one of the preceding claims, wherein the laminated packaging material does not include particulate filler or pigment other than optional clay-coating of the bulk layer.

20. A laminated packaging material as claimed in any one of the preceding claims, comprising at least one laminated opening hole in which a hole in the bulk layer is covered by the other layers of the laminated packaging material.

21. A laminated packaging material as claimed in any one of the preceding claims, wherein the bulk layer is an unbleached paperboard which may be uncoated or coated with a starch-based polymeric coating, preferably the bulk layer is an unbleached liquid packaging board (LPB), which may be coated or uncoated with starch-based polymeric coating.

22. A method of making a laminated packaging material as claimed in any one of Claims 1 to 21, comprising lamination of the bulk layer, barrier layer, outermost layer and innermost layers.

23. A method as claimed in Claim 22, further comprising coating of the barrier layer substrate layer with one or more of the barrier coatings.

24. A method as claimed in Claim 22 or Claim 23, comprising the following steps in any order:
(L) lamination of the bulk layer to the barrier layer
(I) application of the innermost layer
(D) application of the outermost layer.

25. A packaging container comprising the laminated packaging material as defined in any one of claims 1 to 21.

26. A method of making a packaging container as claimed in Claim 25.
